# EUROPÄISCHE PATENTSCHRIFT

(11) **EP 0 905 425 B1**
(45) Veröffentlichungstag und Bekanntmachung des Hinweises auf die Patenterteilung: **02.04.2008**
(21) Anmeldenummer: 98116766.1
(22) Anmeldetag: 04.09.1998
(51) Int. Cl.: F16L 3/24, F16B 37/04

(54) **Befestigungselement**
Fastener
Dispositif de fixation

(30) Priorität: 26.09.1997 DE 29717218 U; 01.12.1997 DE 29721259 U; 19.06.1998 DE 29810981 U
(43) Veröffentlichungstag der Anmeldung: 31.03.1999
(73) Patentinhaber: Halpaus, Wolfgang, 68519 Viernheim (DE)
(72) Erfinder: Halpaus, Wolfgang, 68519 Viernheim (DE); Herzig, Karlheinz, 68519 Viernheim (DE)
(74) Vertreter: Naumann, Ulrich

(56) Entgegenhaltungen:
- EP-A- 0 671 581
- DE-A- 3 823 000
- DE-C- 4 128 157
- US-A- 5 489 173

## Beschreibung

Die Erfindung betrifft ein Befestigungselement zum Festlegen beliebiger Bauteile an einer hinterschnittenen Befestigungsöffnung mit einem in diese einsetzbaren Stützteil, das im Inneren der Befestigungsöffnung verdrehbar ist und dabei die Befestigungsöffnung begrenzenden Haltevorsprünge hintergreift, mit einer separaten Gegenhalteplatte, die außen an den Haltevorsprüngen abstützt, sowie mit einem elastischen Element. Die Gegenhalteplatte kann als flächige Scheibe, bspw. rund oder mehreckig ausgebildet sein. Andererseits kann die Gegenhalteplatte ein Rastelement aufweisen, das in die Befestigungsöffnung eingreift und die Gegenhalteplatle gegen Verdrehen sichert.

Aus der DE 41 28 157 C1 ist ein Befestigungselement für Rohr-, Schlauch- und Kabeischellen für Tragschienen mit C-förmigem Querschnitt bekannt. Das Befestigungselement weist ein in den Längsschlitz der Tragschiene einsetzbares Stützteil auf, welches über einen Führungsnippel mit einer Gegenhalteplatte verbunden ist, die die Eintauchbewegung des Befestigungselements in die Tragschiene begrenzt. Am Umfang des Führungsnippels ist zwischen einem Anschlag am Führungsnippel und der Gegenhalteplatte eine Spiralfeder angeordnet, die die Gegenhalteplatte gegen das Stützteil vorspannt. Beim Einsetzen des Befestigungselements in den Längsschlitz sind Stützteil und Gegenhalteplatte um 90° gegeneinander verdreht, so daß das Stützteil in den Längsschlitz der Tragschiene eintaucht und durch Betätigen des vorgespannten Führungsnippels zur Gegenhalteplatte parallel drehbar ist, um die Haltevorsprünge der Tragschiene zu hintergreifen. Durch die abgewinkelte Form greift die Gegenhalteplatte beim Einsetzen in den Längsschlitz der Tragschiene ein. Auf diese Weise ist gewährleistet, daß sich beim Einsetzen lediglich das Stützteil dreht, während die Gegenhalteplatte in der Position an der Tragschiene bleibt.

Bei dem Befestigungselement der DE 41 28 157 C1 ergibt sich zunächst der Nachteil, daß das Befestigungselement wegen des aufgesetzten Führungsnippels, der mehrfachen Abwinkelung der Gegenhalteplatte und der Spiralfeder in Richtung zur Längsachse durch das Befestigungselement hochbauend ist. Deswegen ist das Verschieben entlang der Tragschiene dadurch oft erschwert. Andererseits sind zum Einsetzen des Befestigungselements meist zwei Hände erforderlich, wobei die eine die Gegenhalteplatte in Position hält und die andere auf den vorgespannten Führungsnippel drückt, um das Stützteil in die hintergreifende Position zu verdrehen. Außerdem ist die Herstellung des Befestigungselements wegen des zusätzlichen Führungsnippels und der Spiralfeder relativ teuer, da diese als zusätzliche Teile eingesetzt werden müssen.

Aus der nachveröffentlichten DE 196 17 750 C1 ist ein Befestigungselement mit Stützteil, Gegenhalteplatte und dazwischen angeordnetem Rückstellelement bekannt. Über das Rückstellelement werden Gegenhalteplatte und Stützteil provisorisch beim Anbringen an einer Montageöffnung zusammengehalten und außerdem bewirkt das Rückstellelement eine Rückstellkraft am Stützteil, so daß dieses in die hintergreifende Position automatisch einschnappen kann. Das bekannte Befestigungselement weist eine Gegenhalteplatte auf, wobei Aufkantungen am Umfang der Gegenhalteplatte die Längskanten der Tragschiene außen umgreifen, um ein Drehen der Gegenhalteplatte zu verhindern. Die in den Längsschlitz der Führungsschiene eingreifenden Auflaufschrägen sind dazu vorgesehen, ein Verdrehen des Stützteils in die falsche Richtung zu blockieren und andererseits ein Abheben des Stützteils von der Gegenhalteplatte beim Einsetzen des Befestigungselements zu bewirken. Die Auflaufschrägen verhindern jedoch nicht ein Drehen der Gegenhalteplatte, so daß zusätzliche Aufkantungen am Umfang als Drehsicherung für die Gegenhalteplatte vorgesehen sein müssen. Die zusätzlichen Aufkantungen erschweren oft das Verschieben des Befestigungselements entlang der als Hohlprofilträger ausgebildeten Führungsschiene vor dem endgültigen Festsetzen des Befestigungselements.

Dokument EP-A-0 671 581 zeigt eine Befestigungselement gemäß dem Oßerbegriff des Anspruchs 1.

Der Erfindung liegt die Aufgabe zugrunde, ein Befestigungselement der eingangs genannten Art derart weiterzubilden, daß dieses kostengünstig produzierbar ist. Außerdem soll das Befestigungselement in seiner Ausführung möglichst flach sein, um ein Verschieben des Befestigungselements entlang einer Führungsschiene zu erleichtern.

Die vorliegende Aufgabe wird erfindungsgemäß durch die Merkmale des Patentanspruches 1 gelöst. Danach verbindet das elastische Element das Stützteil und die Gegenhalteplatte, wobei das Verbindungsteil am Stützteil drehbar befestigt und in seiner Längsrichtung längenanpaßbar ist, wenn das Befestigungselement an der Befestigungsöffnung festgelegt ist.

Es wurde erkannt, daß zum provisorischen Einsetzen des Befestigungselements zunächst eine Einheit aus Stützteil, elastischem Element und Gegenhalteplatte in die Befestigungsöffnung eingesetzt werden kann. Dazu wird die Gegenhalteplatte mit ihren Rastelementen außen auf die Haltevorsprünge seitlich an der Befestigungsöffnung aufgesetzt, so daß die Gegenhalteplatte die Befestigungsöffnung brückenartig überdeckt. Unterhalb der Gegenhalteplatte ist dabei das Stützteil derart angeordnet, daß es in die Befestigungsöffnung eingreift. Durch ein Verdrehen der Gegenhalteplatte gegenüber der Befestigungsöffnung wird über das elastische Element die Drehkraft auf das Stützteil übertragen, so daß dieses sich mitdreht und so die Haltevorsprünge hintergreift. Dabei kann die Gegenhalteplatte auch ohne Verdrehsicherung, d.h. als flächige Scheibe, ausgebildet sein. Eine Verdrehsicherung ist dann entweder nicht oder am Stützteil vorhanden. Bei überdimensioniertemelastischen Element kann diese auch seitlich an den Haltevorsprüngen Reibung erzeugen, was auch als Verdrehsicherung eingesetzt werden kann.

Bei einer besonders vorteilhaften Weiterbildung der Erfindung weist die Gegenhalteplatte ein oder mehrere Rastelemente auf. Ein besonders flach bauendes Befestigungselement entsteht durch ein Rastelement, das in die Befestigungsöffnung eingreift und als mindestens eine Aufkantung des Umfangs der Gegenhalteplatte ausgebildet ist. Bevorzugt sind jedoch zwei Aufkantungen unter einem Winkel zwischen 0 und 90° vorgesehen, so daß die Gegenhalteplatte durch die beiden Rastelemente in der Befestigungsöffnung drehstabil festgelegt werden kann. Da die Gegenhalteplatte mit den Rastelementen beim Drehen in die Befestigungsöffnung eingreift, verringert sich der vertikale Abstand der Gegenhalteplatte in Bezug zu den Haltevorsprüngen, wodurch das Stützteil weiter in die Befestigungsöffnung hineintritt und sich auf diese Weise leicht hinter die Haltevorsprünge drehen kann.

Ein ganz erheblicher Vorteil dieser erfindungsgemäßen Ausbildung liegt darin, daß die Rastelemente bspw. durch Aufkanten des Umfangs um ein bis fünf Grad entstehen können. Dabei kann das Rastelement lediglich durch Einstanzen einer Art Kerbe oder durch die Ausbildung einer separaten und durch Schlitze begrenzten Rastnase ausgebildet sein. Infolgedessen ist die Einheit bestehend aus Gegenhalteplatte, Stützteil und elastischem Element, die in dieser Form auch transportierbar ist, provisorisch an der hinterschnittenen Befestigungsöffnung festlegbar. Beim Transport sind alle Teile unverlierbar durch das elastische Element zusammengehalten. Das Verbindungsteil, bspw. ein Gewindebolzen und/oder eine Hülse und/oder eine Kragenhülse und/oder eine Kontermutter, kann bei einer besonders bevorzugten Weiterbildung der Erfindung erst nach dem provisorischen Festlegen der genannten Einheit durch eine Bohrung in der Gegenhalteplatte und einen Freiraum im elastischen Element in ein Gewinde des Stützteils einschraubbar sein. Auf diese Weise ist das gegenüber dem Stützteil drehbar befestigte Verbindungsteil in seiner Längsrichtung auch dann längenanpaßbar, wenn das Befestigungselement an der Befestigungsöffnung schon provisorisch festgelegt ist.

Das elastische Element hat folgende Funktionen. Einerseits wird es als Transportverbindung zwischen Gegenhalteplatte und Stützteil verwendet, da beide Teile durch das elastische Element zusammengehalten sind. Andererseits kann das elastische Element auch bei eingesetztem Verbindungsteil, bspw. einem Gewindebolzen, zu dessen Transportsicherung verwendet werden, da das Verbindungsteil durch das elastische Element beim Transport festgeklemmt ist. Das elastische Element erzeugt außerdem eine Vorspannung zwischen der Gegenhalteplatte und dem Stützteil parallel zum Verbindungsteil. Dadurch kann die Stärke der Klemmwirkung beim provisorischen Festlegen des Befestigungselements einstellbar sein. Bspw. kann bei Verwendung einer elastischen Scheibe zwischen Gegenhalteplatte und Stützteil durch das Stützteil und die Gegenhalteplatte eine nur sehr geringe Klemmwirkung oder überhaupt keine Klemmwirkung an den Haltevorsprüngen vorgesehen sein. In dem Fall, daß die elastische Scheibe radial breiter als die Befestigungsöffnung ausgeführt ist, kann ein gewisser Drehwiderstand jedoch durch die sich am Außenumfang verformende elastische Scheibe erzeugbar sein. Andererseits kann durch das elastische Element aber auch eine Vorspannung, insbesondere in Richtung parallel zum Verbindungsteil, zwischen Stützteil und Gegenhalteplatte erzeugbar sein, so daß das Befestigungselement beim provisorischen Festlegen an der hinterschnittenen Befestigungsöffnung einschnappt bzw. einrastet.

Bei einer vorteilhaften Weiterbildung der Erfindung ist die Gegenhalteplatte beim Einsetzen in die Befestigungsöffnung gegenüber dieser verdrehbar und übt dadurch über das elastische Element auch eine Drehkraft auf das Stützteil aus, so daß das Stützteil in die hintergreifende Position drehbar ist. Zur Unterstützung des leichten Drehens der Gegenhalteplatte können die Rastelemente an ihrem äußeren Umfang abgerundet sein, so daß ein leichtes Verdrehen und sanftes Einschnappen der vorgespannten Gegenhalteplatte in die Befestigungsöffnung erzielbar ist.

Bevorzugt wird das Stützteil bei eingerasteter Gegenhalteplatte durch das elastische Element in die hintergreifende Position vorgespannt. Beim provisorischen Einsetzen wird die Gegenhalteplatte durch die Bedienperson etwa um 90° um die senkrecht zur Befestigungsöffnung stehende Achse gedreht und das elastische Element erzeugt eine Drehkraft am Stützteil. Insbesondere wenn das Stützteil zunächst durch die Innenseite der Haltevorsprünge gegen Drehen begrenzt ist, bewirkt die Vorspannung durch das elastische Element ein Einschnappen in die hintergreifende Position, wenn das Stützteil an den Haltevorsprüngen freigegeben wird. Das Stützteil wird insbesondere dann freigegeben, wenn die Gegenhalteplatte mit den Rastnasen in die Befestigungsöffnung eingreift.

Erfindungsgemäß ist das elastische Element ein speziell zwischen Gegenhalteplatte und Stützteil eingespanntes Gummiband.

Das Stützteil ist entweder als Trapez mit je zwei parallelen Seiten oder oval, d.h. an den Stirnseiten abgerundet ausgebildet Zum erleichterten Aufgleiten des Stützteils innen an den Haltevorsprüngen kann jeweils eine Fase in Drehrichtung des Stützteils angeordnet sein und andererseits können in Drehrichtung die Ecken des Stützteils abgerundet sein, so daß das Stützteil gut an den Haltevorsprüngen aufgleitet. Auf diese Weise wird ein Verkanten des Stützteils unterbunden. Das Stützteil weist eine Fase parallel zur Drehachse auf, so daß das Stützteil beim Drehen unter die Haltevorsprünge der Befestigungsschiene gedrückt wird. Statt der Fase kann die Stützplatte auch aus einem am Umfang abgewinkelten Blech bestehen, um ein Hintergreifen der Haltevorsprünge zu ermöglichen.

Das Stützteil kann an seiner an der Befestigungsöffnung anliegenden Seite Absenkungen aufweisen. Das beispielsweise ovale oder viereckige Stützteil weist dann einen zentralen erhabenen Bereich und an beiden Seiten je einen abgesenkten, insbesondere gefrästen oder gepreßten Bereich auf. Der erhabene Bereich ist in Draufsicht im wesentlichen viereckig, bspw. quadratisch, wobei die Ausdehnung in Längsrichtung des Stützteils kleiner als die Breite der Befestigungsöffnung ist. Bei der provisorischen Festlegung des Befestigungselements, bspw. beim Drehen des Stützteils, rastet dieses mit dem erhabenen Bereich in der Befestigungsöffnung ein und die Absenkungen liegen dann innen an den Haltevorsprüngen des Hohlprofilträgers an. Dadurch ist das Befestigungselement durch die mit den Haltevorsprüngen zusammenwirkenden Absenkungen verdrehgesichert. Zur Montageerieichterung können die Ecken und Kanten des erhabenen Bereichs abgerundet oder angefast sein. Die mittige Bohrung zum Verbinden mit dem Verbindungsteil, bspw. ein Gewindebolzen oder eine Kragenhülse, kann je nach Ausführung mit oder ohne Innengewinde versehen sein.

Die der Gegenhalteplatte zugewandte untere Seite eines elastischen Formstücks ist als Wulst ausgebildet, welcher durch die mittige Bohrung der Gegenhalteplatte gesteckt wird. Das Formstück sitzt auf dem Bohrungsrand der Gegenhalteplatte auf, welche auf diese Weise die beiden Teile elastisch verbindet, so daß die Befestigungseinheit mühelos in den Hohlprofilträger eingesetzt werden kann. Der Wulst wird so ausgebildet, daß einerseits das gummielastische Formstück auch bei seiner Dehnung die Gegenhalteplatte und die Drusckscheibe sicher zusammenhält, und daß andererseits beim Anziehen der Kontermutter der Wulst in die Bohrung der Gegenhalteplatte gleitet und eine sichere Fixierung des Befestigungselements im Hohlprofilträger bewirkt. Das als Formstück ausgebildete elastische Element hat die Gestalt einer Gummihülse mit Wulst an einem Endumfang. Das Formstück ist sowohl zum Stützteil als auch zur Gegenhalteplatte drehbar angeordnet. Ein gewisser Drehwiderstand ist erwünscht, um unbeabsichtigtes Drehen des Befestigungselements zu verhindern.

Wenn die Befestigungsöffnung in einem Hohlprofilträger angeordnet ist, können die innenliegenden Seitenwände als Drehbegrenzungsanschlag für das in Drehrichtung vorgespannte Stützteil dienen. Beim provisorischen Einsetzen dreht das Stützteil durch das elastische Element in Richtung der Vorspannung, gleitet auf der Innenseite an der Wandung der Haltevorsprünge entlang und schlägt an der innenliegenden Seitenwand des Hohlprofilträgers an. Jedoch kann das Stützteil wegen der vorteilhaften Ausbildung der Gegenhalteplatte mit Rastelement auch ohne anschlagen an den Seitenwänden des Hohlprofilträgers verwendet werden, da das Stützteil über das elastische Element in der hintergreifenden Position gehalten wird und sich deswegen nicht aus dieser Position herausdreht. Nach dem provisorischen Festlegen kann das Befestigungselement entlang der Führungsschiene verschoben werden und ein Verbindungsteil, bspw. ein Gewindebolzen kann in die Einheit aus Stützteil, Gegenhalteplatte und elastischem Element einschraubbar sein. Eine Kontermutter kann gegen die Gegenhalteplatte festgezogen werden, um das Befestigungselement endgültig an der Führungsschiene oder der Befestigungsöffnung festzulegen. Das elastische Element hat beim endgültigen Festlegen des Befestigungselements meist keine tragende Funktion mehr, könnte also dann auch entfernt werden.

Bei einer besonders bevorzugten Weiterbildung der Erfindung ist mindestens eine, der am Umfang der Gegenhalteplatte angeordneten Aufkantungen als Spreizschenkel ausgebildet. D.h. der Biegewinkel des Rastelements kann zwischen 0 und 90° liegen, wobei in Zusammenhang mit der Handhabung kleine Biegewinkel beim Aufkanten, bspw. im Bereich von 1 bis 10°, bevorzugt werden.

Die Gegenhalteplatte kann im Grundriß sowohl rund als auch quadratisch ausgebildet sein. Die Gegenhalteplatte kann dabei als ebene Scheibe ohne Aufkantungen und Rastnasen ausgebildet sein. Andererseits kann der Umfangsrand Aufkantungen aufweisen, je zwei an gegenüberliegenden Seiten, wobei der Abstand jeweils zwischen zwei Aufkantungen einer Seite kleiner als die Breite der Befestigungsöffnung im Hohlprofilträger ist, so daß die Aufkantungen beim Drehen der Gegenhalteplatte während des provisorischen Festlegens in die Befestigungsöffnung einrasten können. Dadurch ist die Gegenhalteplatte und damit auch das Befestigungselement gegen Verdrehen gesichert. Natürlich können statt zwei Aufkantungen einer Seite auch eine erhabene Fläche mit Absenkungen oder eine breite Rastnase an jeder Seite vorgesehen sein.

Bei einer anderen Weiterbildung weist die Aufkantung seitlich zwei Aussparungen auf, in denen das elastische Band lagerbar ist. Die Aufkantung kann dabei als T-förmige Rastnase am Umfang der Gegenhalteplatte ausgebildet sein, so daß ein elastisches Gummiband um die T-Schenkel, bspw. in Gummiband-Aufnahmeschlitze, einlegbar ist. Das elastische Gummiband ist dann zwischen den zwei an der Gegenhalteplatte angeordneten Aufkantungen, d.h. T-förmigen Rastnasen, über das Stützteil geführt. Dabei kann das Gummiband im Bereich des Stützteils verdreht bzw. überkreuzt sein, was Vorteile als Transportsicherung für einen lose eingeschraubten Gewindebolzen haben kann. Das Gummiband spannt von einer Rastnase der Gegenhalteplatte zu einer gegenüberliegenden Rastnase, so daß das dazwischen eingefangene Stützteil mit der Gegenhalteplatte zusammen gehalten wird. Ober die Spannung des elastischen Gummibands wird dann beim provisorischen Einsetzen in die Befestigungsöffnung auch die Vorspannkraft an den Haltevorsprüngen der Schiene bewirkt.

Bevorzugt ist das Befestigungselement beim provisorischen Einsetzen in die Befestigungsöffnung mit den Aufkantungen der Gegenhalteplatte außen auf die Haltevorsprünge aufsetzbar, wobei die Aufkantungen in Form und Größe derart ausgebildet sind, daß diese nach dem Drehen der Gegenhalteplatte in die Befestigungsöffnung eingreifen. Dazu kann die Gegenhalteplatte ein im wesentlichen kreisförmigen Umfang aufweisen, mit seitlichen Ausnehmungen bzw. geraden Bereichen um die Gegenhälteplatte besonders bevorzugt um die Achse drehen zu können. In einem zu diesen Griffbereichen rechtwinklig versetzten Abschnitt des Umfangs der Gegenhalteplatte sind die beiden Rastelemente mit im wesentlichen T-förmigen Aussehen nach unten, d.h. in Richtung der Befestigungsöffnung abgebogen. Die T-Form erleichtert dabei das Anbringen eines elastischen Bandes. Andererseits kann das Rastelement auch lediglich durch einen Stanzvorgang erzeugbar sein, bei dem der Umfangsbereich der Gegenhalteplatte leicht nach unten gedrückt ist, ohne daß ein Schlitz dabei entstehen muß. Mit den Rastelementen greift die Gegenhalteplatte in die Befestigungsöffnung ein und hält somit die Gegenhalteplatte drehfest und indirekt über das elastische Element auch das Stützteil in der hintergreifenden Position.

Das Stützteil weist bevorzugt an der Umfangskante. Abflachungen oder Fasen auf, die ein verbessertes Aufgleiten des Stützteils an den Haltevorsprüngen beim Drehen des Befestigungselements in die provisorische Lage vorsehen. Das Stützteil kann vorteilhaft beim Drehen in die provisorische Lage von der Gegenhalteplatte leicht angehoben werden. Auf diese Weise ist ein Einrasten des Stützteils über die Vorspannung oder über einen nach außen oder innen zunehmenden Querschnitt des Stützteils möglich.

Das Verbindungsteil ist bevorzugt als Gewindebolzen ausgebildet, der in ein im Stützteil angeordnetes Innengewinde einschraubbar ist. Andererseits kann das Verbindungsteil eine Hülse mit Kragen sein, die in eine Bohrung des Stützteils einsteckbar ist und die ein Innengewinde aufweist, an dem ein in Längsrichtung verstellbarer Bolzen befestigbar ist. Die erstgenannte Ausführungsform mit dem Gewindebolzen ist erstens kostengünstiger zu produzieren und zweitens kann in diesem Fall der Gewindebolzen auch erst dann in die aus Stützteil, elastischem Element und Gegenhalteplatte bestehende Einheit eingschraubt werden, wenn diese schon provisorisch an der hinterschnittenen Befestigungsöffnung festgelegt ist.

Das elastische Element kann zusätzlich als Transportsicherung für das drehbare Verbindungsteil und/oder zum Zentrieren des Befestigungselements in der Befestigungsöffnung vorgesehen sein. Dabei kann das Verbindungsteil beim Transport in festgeschraubtem Zustand gegenüber dem Herausdrehen aus der Gewindebohrung im Stützteil gesichert werden oder beim Transport in dem elastischen Element liegend eingespannt sein.

Die Aufgabe der vorliegenden Erfindung wird durch ein Befestigungselement nach Anspruch 1 gelöst. Danach drückt das elastische Element das Stützteil und die Gegenhalteplatte gegeneinander.

Das Befestigungselement kann auch mit zwei parallelen elastischen Elementen, bspw. einer elastischen Scheibe und einem gummiartigen Band oder eine Feder und ein gummiartiges Band verwendet werden. Auf diese Weise kann das gummiartige Band als Transportsicherung und bspw. die elastische Scheibe zum Zentrieren des Befestigungselements in der Befestigungsöffnung vorgesehen sein.

Weitere vorteilhafte Ausführungsformen der Erfindung ergeben sich aus den Unteransprüchen und der Beschreibung. Eine Ausführungsform eines Befestigungselementes ist in den Zeichnungen beschrieben. Es zeigen, jeweils in schematischer Darstellung,
- Fig. 1: einen Querschnitt durch ein Befestigungselement nach der vorliegenden Erfindung beim provisorischen Festlegen an einem Hohlprofilträger
- Fig. 2: eine Seitenansicht der Einheit bestehend aus Stützteil, Gegenhalteplatte und elastischem Element nach vorliegenden Erfindung,
- Fig. 3: eine Draufsicht auf das Stützteil der vorliegenden Erfindung und
- Fig. 4: eine Draufsicht auf die Einheit bestehend aus Stützteil, Gegenhalteplatte und elastischem Element nachder vorliegenden Erfindung.

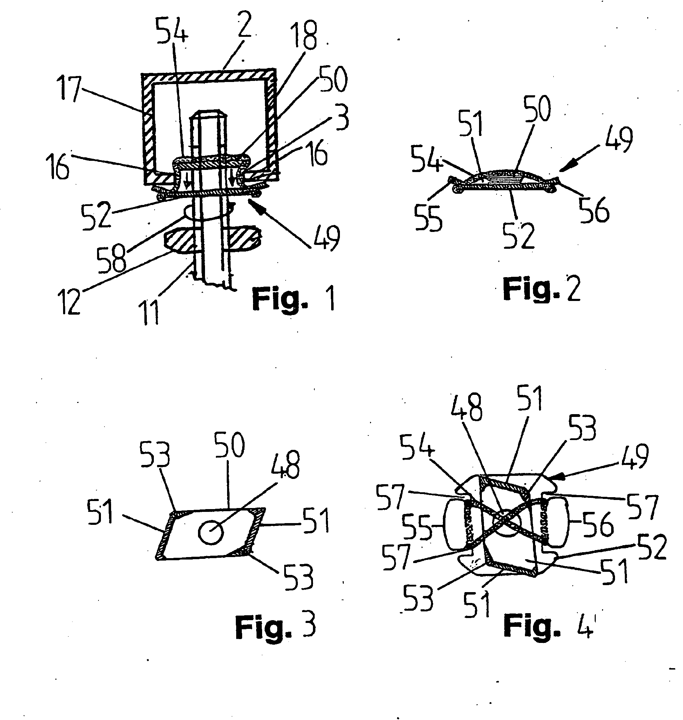

Die Fig. 1 bis 4 zeigen ein Befestigungselement 49 nach der erfindungsgemäßen Ausführungsform. Das Befestigungselement 49 weist das in Fig. 3 dargestellte von unten betrachtete trapezförmige Stützteil 50 auf. Das Stützteil 50 besitzt eine mittige Bohrung 48 mit Innengewinde zum Einschrauben des Gewindebolzens 11. Das Stützteil 50 weist Fasen 51 längsseitig und/oder querseitig am Umfang auf, die ein drehendes Hintergreifen der die Befestigungsöffnung 3 begrenzenden Haltevorsprünge 16 erleichtert. Die Fasen 51, 58 sind in Richtung zur Gegenhalteplatte 52 hin geneigt. Außerdem weist das Stützteil 50 an seinem Umfang Abrundungen 53 auf, die ebenfalls ein erleichterndes Aufgleiten des Stützteils 50 hinter die Haltevorsprünge 16 erleichtern. Das Befestigungselement 59 weist weiterhin ein Gummiband 54 als elastisches Element auf, das wie in Fig. 4 gezeigt um Aufkantungen 55 und 56, und insbesondere dort durch Schlitze 57 geführt ist.

Das Befestigungselement 49 ist in der in Fig. 2 dargestellten Liefereinheit extrem flachbauend und wird derart In der Befestigungsöffnung 3 eingesetzt, daß die unter geringem Winkel, bspw. zwischen ein und zehn Grad, aufgekanteten Aufkantungen 55, 56 auf den Haltevorsprüngen 16 außen am Hohlprofilträger 2 aufliegen. Aufgrund der elastischen Spannung des Gummibandes 54 wird das Stützteil mit der Schmalseite in der Befestigungsöffnung 3 gehalten. Wird nun die Gegenhalteplatte 52 entlang einer Drehrichtung 58 verdreht, erzeugt das Gummiband 54 eine Drehkraft am Stützteil 50. Da das Stützteil 50 jedoch zwischen den Längskanten der Haltevorsprünge 16 angeordnet ist, kann sich dieses zunächst im allgemeinen nicht verdrehen. Wird nun die Gegenhalteplatte 52 gegen den Widerstandes des Gummibandes 54 weitergedreht, bis die Aufkantungen 55 und 56 in die Befestigungsöffnung 3 einrasten, können die Aufkantungen 55, 56 derart abgewinkelt sein, daß das Stützteil 50 weiter in Richtung des Hohlprofilträgers 2 hineingedrückt wird.

In der Fig. 1 ist die Position kurz vor dem Einrasten dargestellt, jedoch ist die Gegenhalteplatte 52 zur verbesserten Sichtbarkeit nicht verdreht dargestellt. In der in Fig. 1 dargestellten Position des Stützteils 50 beginnen die Fasen 51 am Umfang des Stützteils 50 zu wirken. Das Stützteil 50 wird infolgedessen zusätzlich nach innen in Richtung des Hohlprofilträgers 2 gedrückt, so daß der Umfang des Stützteils 50 zwischen den Haltevorsprüngen 16 nach innen freikommt und wegen der Spannung durch das Gummiband 54 ebenfalls zu drehen beginnt. Je nach Länge des Stützteils 50, schlägt es mit den längsseitigen Umfangskanten an den Seitenwänden 17 und 18 innen am Hohlprofilträger 2 an und wird gegen die Seitenwände 17, 18 an der Innenseite vorgespannt

Das Stützteil 50 kann jedoch auch eine kleinere Längenausdehnung aufweisen, als der Hohlprofilträger 2 an seiner Innenseite zwischen den beiden Seitenwänden 17, 18. Da das Stützteil 50 durch das Gummiband 54 jedoch in der vorbestimmten Lage elastisch gehalten wird, ist der Anschlag an den Seitenwänden 17, 18 nicht unbedingt erforderlich, um eine optimale Befestigung des Befestigungselements 49 zu erreichen.

Wenn dann das Stützteil 50 die Innenseiten der Haltevorsprünge 16 hintergreift und die Haltevorsprünge 16 zwischen dem Stützteil 50 und der Gegenhalteplatte 52 provisorisch durch die Spannung des Gummibandes 54 eingeklemmt sind, ist das Befestigungselement 49 entlang des Hohlprofilträgers 2 verschiebbar und provisorisch festgelegt. In der Folge kann nun der Gewindebolzen 11 in die Bohrung 48 mit Innengewinde eingeschraubt werden. Erst wenn die Kontermutter 12 festgezogen ist, ist das Befestigungselement 49 nicht mehr entlang der Längsrichtung der Befestigungsöffnung verschiebbar und dann ist auch keine Verstellung des Gewindebolzens 11 in seiner Längsrichtung mehr möglich. Erst wenn die Kontermutter 12 festgezogen ist, ist das Befestigungselement 49 endgültig festgelegt und kann sehr hohe Tragkräfte auf den Hohlprofilträger 2 übertragen. Das Gummiband 54 hat in dieser endgültigen Befestigungslage keine tragende Funktion mehr.

In Fig. 4 ist schließlich noch eine Draufsicht auf das Befestigungselement 49 gezeigt, wie es zum provisorischen Festlegen und für den Transport zusammengesetzt ist. Das Stützteil 50 ist jedoch zur Verbesserung der Anschaulichkeit mit oben liegenden Fasen 51 gezeigt. Da die Fasen 51 das Stützteil 50 von der Gegenhalteplatte 52 beim Verdrehen abheben sollen, sind die Fasen 51 in Wirklichkeit nicht sichtbar, da diese zur Gegenplatte 52 hin angeordnet sind. Das Gummiband 54 umgreift die Aufkantungen 55, 56 in seitlichen Schlitzen 52 und ist überkreuzend über das Stützteil 50 geführt. Falls das Befestigungselement 49 beim Liefern und beim provisorischen Einsetzen mit dem Gewindebolzen 11 versehen ist, erzeugt das Überkreuzen des Gummibandes 54 eine geringe Vorspannung an dem Außenumfang des Gewindebolzens 11, was als Transport- bzw. Montagesicherung vorteilhaft ist.

## Patentansprüche

1. Befestigungselement zum Festlegen beliebiger Bauteile an einer hinterschnittenen Befestigungsöffnung (3) mit einem in diese einsetzbaren Stützteil (50), das im Inneren der Befestigungsöffnung (3) verdrehbar ist und dabei die Befestigungsöffnung (3) begrenzenden Haltevorsprünge (16) hintergreift, mit einer separaten Gegenhalteplatte (52), die außen an den Haltevorsprüngen (16) abstützt, sowie mit einem elastischen Element (54), wobei das elastische Element (54) das Stützteil (50) und die Gegenhalteplatte (52) verbindet und wobei ein Verbindungsteil (7, 8, 9, 10, 11, 12) am Stützteil (50) drehbar zu befestigen ist und in seiner Längsrichtung längenanpassbar ist, wenn das Befestigungselement (1,19, 22, 32, 34, 42, 49) an der Befestigungsöffnung (3) festgelegt ist,
**dadurch gekennzeichnet, dass** das elastische Element als gummielastisches Band (54) die Gegenhalteplatte (52) umgreifend ausgeführt ist und dass das gummielastische Band (54) überkreuzend über das Stützteil (50) geführt ist.

2. Befestigungselement nach Anspruch 1
**dadurch gekennzeichnet,**
**daß** das elastische Element (6, 33, 37, 44, 54) das Stützteil (4, 20, 23, 35, 50) und die Gegenhalteplatte (5, 24, 36, 43, 47, 52) gegeneinander drückt,

3. Befestigungselement nach einem der Ansprüche 1 bis 2, **dadurch gekennzeichnet, daß** das elastische Element (6, 33, 37, 44, 54) und ein Auseinanderfallen des Befestigungselements (1, 19, 22, 32, 34, 42, 49) beim Festlegen an der Befestigungsöffnung (3) verhindert, wenn das Verbindungsteil (7, 8, 9, 10, 11, 12), insbesondere ein Gewindebolzen (11), nicht zwischen Stützteil (4, 20, 23, 35, 50) und Gegenhalteplatte (5, 24, 36, 43, 47, 52) angeordnet ist,

4. Befestigungselement nach einem der Ansprüche 1 bis 3, **dadurch gekennzeichnet, daß** die Gegenhalteplatte (5, 24, 36, 43, 47, 52) beim Einsetzen in die Befestigungsöffnung (3) gegenüber dieser verdrehbar ist und **dadurch** über das elastische Element (6, 33, 37, 44, 54) eine Drehkraft auf Stützteil (4, 20, 23, 35, 50) ausübt, so daß das Stützteil (4, 20, 23, 35, 50) in die hintergreifende Position drehbar ist.

5. Befestigungselement nach einem der Ansprüche 1 bis 4, **dadurch gekennzeichnet, daß** die mindestens eine, am Umfang der Gegenhalteplatte (5, 24, 36, 43, 47, 52) angeordnete Aufkantung (15, 27, 28, 38, 39, 55, 56) als Spreizschenkel, insbesondere mit einem Biegewinkel kleiner 90°, ausgebildet ist.

6. Befestigungselement nach einem der Ansprüche 1 bis 5, **dadurch gekennzeichnet, daß** das Befestigungselement (1, 19, 22, 32, 34, 42, 49) beim Einsetzen in die Befestigungsöffnung (3) mit den Aufkantungen (15, 27, 28, 38, 39, 55, 56) der Gegenhalteplatte (5, 24, 36, 43, 47, 52) außen auf die Haltevorsprünge aufsetzbar ist, wobei die Aufkantungen (15, 27, 28, 38, 39, 55, 56) in Form und Größe derart ausgebildet sind, um nach dem Drehen der Gegenhalteplatte (5, 24, 36, 43, 47, 52) in die Befestigungsöffnung (3) eingreifen zu können.

7. Befestigungselement nach einem der Ansprüche 1 bis 6, **dadurch gekennzeichnet, daß** das Stützteil (4, 20, 23, 35, 50) an der Umfangskante Fasen (51) aufweist, um beim Drehen des Befestigungselements (1, 19, 22, 32, 34, 42, 49) ein Abheben von der Gegenhalteplatte (5, 24, 36, 43, 47, 52) und/oder ein Aufgleiten des Stützteils (4, 20, 23, 35, 50) an der Innenseite der Haltevorsprünge (16) zu ermöglichen.

8. Befestigungselement nach einem der Ansprüche 1 bis 7, **dadurch gekennzeichnet, daß** das Verbindungsteil (7, 8, 9, 10, 11, 12) eine Hülse (8) mit Kragen (9) ist, die in eine Bohrung (48) des Stützteils (4, 20, 23, 35, 50) einsteckbar ist und eine Gewinde aufweist, an dem ein in Längsrichtung verstellbarer Bolzen (11) befestigbar ist.

9. Befestigungselement nach einem der Ansprüche 1 bis 8, **dadurch gekennzeichnet, daß** das elastische Element (6, 33, 37, 44, 54) zusätzlich als Transportsicherung für das drehbare Verbindungsteil (7, 8, 9, 10, 11, 12) und/oder zum Zentrieren des Befestigungselements (1, 19, 22, 32, 34, 42, 49) in der Befestigungsöffnung (3) vorgesehen ist.

10. Befestigungselement nach einem der Ansprüche 1 bis 9, **dadurch gekennzeichnet, daß** die Gegenhatteplatte (5, 24, 36, 43, 47, 52) ein Rastelement (15, 27, 28, 38, 39, 55, 56) aufweist, das in die Befestigungsöffnung (3) eingreift und die Gegenhalteplatte (5, 24, 36, 43, 47, 52) gegen Verdrehen sichert und daß das in die Befestigungsöffnung eingreifende Rastelement (15, 27, 28, 38, 39, 55, 56) als mindestens eine Aufkantung des Umfangs der Gegenhalteplatte (5, 24, 36, 43, 47, 52) ausgebildet ist.

## Claims

1. Fastening element for fixing any components to an undercut fixing opening (3), having a supporting part (50) that is insertable in the fixing opening and is rotatable inside the fixing opening (3), in the process engaging behind retaining projections (15) defining the fixing opening (3), having a separate counter-retaining plate (52), which externally is supported against the retaining projections (15), and having a resilient element (54), wherein the resilient element (54) connects the supporting part (50) and the counter-retaining plate (52), and wherein a connecting member (7, 8, 9, 10, 11, 12) is to be rotatably fastened to the supporting part (50) and is adjustable in length in its longitudinal direction when the fastening element (1, 19, 22, 32, 34, 42, 49) is fixed to the fixing opening (3), **characterised in that** the resilient element is in the form of an elastomeric band (54), the counter-retaining plate (52) is of encompassing construction and **in that** the elastomeric band (54) is guided cross-wise over the supporting part (50).

2. Fastening element according to claim 1, **characterised in that** the resilient element (6, 33, 37, 44, 54) presses the supporting part (4, 20, 23, 35, 50) and the counter-retaining plate (5, 24, 36, 43, 47, 52) against each another.

3. Fastening element according to claim 1 or 2, **characterised in that** the resilient element (6, 33, 37, 44, 54) prevents the fastening element (1, 19, 22, 32, 34, 42, 49) from coming undone as it is positioned at the fixing opening (3) when the connecting part (7, 8, 9, 10, 11, 12), in particular a threaded bolt (11), is not arranged between the supporting part (4, 20, 23, 35, 50) and counter-retaining plate (5, 24, 36, 43, 47, 52).

4. Fastening element according to any one of claims 1 to 3, **characterised in that** upon insertion into the fixing opening (3) the counter-retaining plate (5, 24, 36, 43, 47, 52) is rotatable relative thereto and thereby exerts, via the resilient element (6, 38, 37, 44, 54), a torsional force on the supporting part (4, 20, 23, 35, 50), so that the supporting part (4, 20, 23, 35, 50) is rotatable into the engaged position.

5. Fastening element according to any one of claims 1 to 4, **characterised in that** the at least one upturned member (15, 27, 28, 38, 39, 55, 56) arranged at the periphery of the counter-retaining plate (5, 24, 36, 43, 47, 52) is in the form of an expansible member, in particular with a bending angle of less than 90°.

6. Fastening element according to any one of claims 1 to 5, **characterised in that** upon insertion into the fixing opening (3) the fastening element (1, 19, 22, 32, 34, 42, 49) is placeable with the upturned members (15, 27, 28, 38, 39, 55, 56) of the counter-retaining plate (5, 24, 36, 43, 47, 52) externally on the retaining projections, wherein the shape and size of the upturned members (15, 27, 28, 38, 39, 55, 56) are designed so that after rotation of the counter-retaining plate (5, 24, 36, 43, 47, 52) they are able to engage in the fixing opening (3).

7. Fastening element according to any one of claims 1 to 6, **characterised in that** the supporting part (4, 20, 23, 35, 50) has bevels (51) at its peripheral edge, in order upon rotation of the fastening element (1, 19, 22, 32, 34, 42, 49) to permit a lifting from the counter-retaining plate (5, 24, 36, 43, 47, 52) and/or a sliding on of the supporting part (4, 20, 23, 35, 50) at the inner side of the retaining projections (16).

8. Fastening element according to any one of claims 1 to 7, **characterised in that** the connecting part (7, 8, 9, 10, 11, 12) is a sleeve (8) with collar (9), which is insertable into a bore (48) of the supporting part (4, 20, 23, 35, 50) and has a screw thread to which a bolt (11) adjustable in the longitudinal direction is fastenable.

9. Fastening element according to any one of claims 1 to 8, **characterised in that** the resilient element (6, 33, 37, 44, 54) is additionally provided as transportation securing means for the rotatable connecting part (7, 8, 9, 10, 11, 12) and/or for centring the fastening element (1, 19, 22, 32, 34, 42, 49) in the fixing opening (3).

10. Fastening element according to any one of claims 1 to 9, **characterised in that** the counter-retaining plate (5, 24, 36, 43, 47, 52) comprises a locking element (15, 27, 28, 38, 39, 55, 56) that engages in the fixing opening (3) and secures the counter-retaining plate (5, 24, 36, 43, 47, 52) against rotation and **in that** the locking element (15, 27, 28, 38, 39, 55, 56) engaging in the fixing opening is in the form of at least one upturned member of the periphery of the counter-retaining plate (5, 24, 36, 43, 47, 52).

## Revendications

1. Elément de fixation pour la fixation de composants quelconques à une ouverture de fixation (3) en contre-dépouille avec une pièce de support (50) pouvant être logée dans celle-ci, qui peut être tordue dedans et est en prise dans ce cas derrière des saillies de retenue (16) délimitant l'ouverture de fixation (3), avec une contre-plaque de retenue (52) séparée qui s'appuie à l'extérieur aux saillies de retenue (16), ainsi qu'avec un élément élastique (54), l'élément élastique (54) reliant la pièce de support (50) et la contre-plaque de retenue (52) et une pièce de liaison (7, 8, 9, 10, 11) devant être fixée à rotation à la pièce de support (50) et pouvant être ajustée en longueur dans sa direction longitudinale quand l'élément de fixation (1, 19, 22, 32, 34, 42, 49) est fixé à l'ouverture de fixation (3),
**caractérisé par le fait que** l'élément élastique est réalisé sous la forme d'une bande (54) ayant l'élasticité du caoutchouc enveloppant la contre-plaque de retenue (52) et que la bande (54) ayant l'élasticité du caoutchouc est guidée en croisant au-dessus de la pièce de support (50).

2. Elément de fixation selon la revendication 1,
**caractérisé par le fait que** l'élément élastique (6, 33, 37, 44, 54) serre la pièce de support (4, 20, 23, 35, 50) et la contre-plaque de retenue (5, 24, 36, 43, 47, 52) l'une contre l'autre.

3. Elément de fixation selon l'une des revendications 1 et 2, **caractérisé par le fait que** l'élément élastique (6, 33, 37, 44, 54) empêche une dislocation de l'élément de fixation (1,19, 22, 32, 34, 42, 49) lors de la fixation à l'ouverture de fixation (3) quand la pièce de liaison (7, 8, 9, 10, 11, 12), en particulier un boulon fileté (11), n'est pas disposée entre la pièce de support (4, 20, 23, 35, 50) et la contre-plaque de retenue (5, 24, 36, 43, 47, 52).

4. Elément de fixation selon l'une des revendications 1 à 3, **caractérisé par le fait que** la contre-plaque de retenue (5, 24, 36, 43, 47, 52) peut être tordue par rapport à l'ouverture de fixation (3) lors du montage dans celle-ci et de ce fait une force de torsion s'exerce sur la pièce de support (4, 20, 23, 35, 50) par l'intermédiaire de l'élément élastique (6, 33, 37, 44, 54) de telle sorte que la pièce de support (4, 20, 23, 35, 50) peut être tournée dans la position de prise à l'arrière.

5. Elément de fixation selon l'une des revendications 1 à 4, **caractérisé par le fait que** le au moins un chant (15, 27, 28, 38, 39, 55, 56) disposé à la périphérie de la contre-plaque de retenue (5, 24, 36, 43, 47, 52) est réalisé sous la forme d'une aile d'écartement, en particulier avec un angle de pliage inférieur à 90°.

6. Elément de fixation selon l'une des revendications 1 à 5, **caractérisé par le fait que** l'élément de fixation (1, 19, 22, 32, 34, 42, 49) peut être posé de l'extérieur sur les saillies de retenue par les chants (15, 27, 28, 38, 39, 55, 56) de la contre-plaque de retenue (5, 24, 36, 43, 47, 52) lors du montage dans l'ouverture de fixation (3), les chants (15, 27, 28, 38, 39, 55, 56) étant réalisés en forme et dimension de manière à pouvoir venir en prise dans l'ouverture de fixation (3) après la rotation de la contre-plaque de retenue (5, 24, 36, 43, 47, 52).

7. Elément de fixation selon l'une des revendications 1 à 6, **caractérisé par le fait que** la pièce de support (4, 20, 23, 35, 50) présente des biseaux (51) à l'arête périphérique afin de rendre possible un enlèvement de la contre-plaque de retenue (5, 24, 36, 43, 47, 52) et/ou un glissement vers le haut de la pièce de support (4, 20, 23, 35, 50) sur le côté intérieur des saillies de retenue (16) lors de la rotation de l'élément de fixation (1, 19, 22, 32, 34, 42, 49).

8. Elément de fixation selon l'une des revendications 1 à 7, **caractérisé par le fait que** la pièce de liaison (7, 8, 9, 10, 11, 12) est une douille (8) avec une collerette (9) qui peut être enfichée dans un alésage (48) de la pièce de support (4, 20, 23, 35, 50) et présente un taraudage sur lequel peut être fixé un boulon (11) ajustable en direction longitudinale.

9. Elément de fixation selon l'une des revendications 1 à 8, **caractérisé par le fait que** l'élément élastique (6, 33, 37, 44, 54) est prévu en addition en tant que garantie de transport pour la pièce de liaison (7, 8, 9, 10, 11, 12) rotative et/ou pour le centrage de l'élément de fixation (1, 19, 22, 32, 34, 42, 49) dans l'ouverture de fixation (3).

10. Elément de fixation selon l'une des revendications 1 à 9, **caractérisé par le fait que** la contre-plaque de retenue (5, 24, 36, 43, 47, 52) présente un élément d'encliquetage (15, 27, 28, 38, 39, 55, 56) qui vient en prise dans l'ouverture de fixation (3) et protège la contre-plaque de retenue (5, 24, 36, 43, 47, 52) contre une torsion et que l'élément d'encliquetage (15, 27, 28, 38, 39, 55, 56) venant en prise dans l'ouverture de fixation est réalisé sous la forme d'au moins un chant de la périphérie de la contre-plaque de retenue (5, 24, 36, 43, 47, 52).
